# EUROPEAN PATENT SPECIFICATION

(11) **EP 1 159 686 B1**
(45) Date of publication and mention of the grant of the patent: **10.09.2003**
(21) Application number: 00916035.9
(22) Date of filing: 03.03.2000
(51) Int. Cl.: G06F 13/38

(54) **METHOD AND APPARATUS FOR THE BLOCK TRANSFER OF DATA**
VERFAHREN UND ANORDNUNG FÜR BLOCKDATENÜBERTRAGUNG
PROCEDE ET APPAREIL PERMETTANT DE TRANSFERER DES DONNEES PAR BLOCS

(30) Priority: 04.03.1999 US 262381
(43) Date of publication of application: 05.12.2001
(73) Proprietor: DEKA PRODUCTS LIMITED PARTNERSHIP, Manchester, NH 03101 (US)
(72) Inventor: DUGGAN, Robert J., Stafford, NH 03884 (US)
(74) Representative: Woodward, John Calvin
(86) International application number: US0005589
(87) International publication number: WO00052588

(56) References cited:
- US-A- 5 228 130
- US-A- 5 608 889
- US-A- 5 687 357
- US-A- 5 838 993

## Description

### Background

### 1. Field of the Invention

The present invention relates generally to the field of data transfers between devices. More particularly, the present invention relates to system that allows for the block transfer of data to an Input/Output device.

### 2. Related Art

When transferring data, a typical computer based system utilizes address and data busses to allow for communication between a microprocessor and other associated devices. The address bus is used to address a particular location in an associated device (either within or external to the computer itself) where specific data is to be transferred. This is accomplished by placing the predefined address for the external device to which the microprocessor-wishes to transfer data on the address bus.

Once the address for the desired location of data has been placed on the bus, each external device determines whether the microprocessor desires data to be transferred to it. This is done by many known prior art methods and is generally accomplished by having each device compare the address on the address bus to it's own pre-assigned address (or addresses). If the address matches, the external device takes the data presented on the data bus and stores it in its own memory. Alternatively, such transfers may be made by having the microprocessor alert the device, via a control line, that it is going to transfer data to the device. After alerting the device, the microprocessor places an address within the device (such as, an address of a register) on the address bus. The data is typically transmitted as a data-word, the size of which varies depending upon the width of the data bus.

In order to transfer a significant amount of data to the external device, the microprocessor may repetitively place the address of the external device on the address bus. The external device continues to take each successive data-word presented on the data bus and stores it in its memory.

The microprocessor may maintain a pointer that corresponds to a memory location containing the data it wishes to transfer to the external device. As each data-word is transferred to the external device, the pointer is updated to the correspond to the next location of data the microprocessor wishes to transfer to the external device. However, in order to ensure each successive data word is transferred to the same external device (assuming the microprocessor wants the next data word transferred to that device) the address on the address bus is held constant as the pointer to the next data-word in the microprocessor is updated.

Some modem microprocessors also contain the capability of streamlining this process by allowing for transfer of large blocks of data from one memory location to another memory location by performing a "block transfer." As is well known in the art, block transfers may be performed by Direct Memory Address (DMA) transfers using a separate, additional microprocessor or other hardware and/or software structures (a "DMA controller"). DMA transfers can be much faster than a word-by-word data transfer. The increase in speed comes from the inclusion of the separate structure to handle incrementing the pointer corresponding to the memory location containing the data-word which is to be transferred next and the corresponding address where the data will be received.

DMA transfers can be conducted as follows. The first memory location that is to be transferred from the block and the size of the block is determined and provided to the DMA controller. The destination is also determined. The DMA controller maintains the destination pointer that corresponds to the address to which the data in the memory location is to be transferred. Each memory location in the block of memory to be transferred is then successfully placed on the data bus. After each transfer, both the memory pointer and destination pointer of the DMA controller are incremented. As is well known in the art, the methods of "incrementing" a pointer may vary and include incrementation that steps through a linked list or, more simply, just adds a fixed value to the current value stored in the pointer.

DMA transfers allow for the rapid transfer of data between memory locations when both the location where the data is currently stored, and the location it needs to be transferred to, have discrete addresses that vary in the same manner in which the pointers are incremented. When transferring a block of data from one memory location to another memory location, both of which are within the same memory unit or same type of memory. this type of addressing works very effectively.

However, there are situations in which the data is not transferred to sequential or incremental addresses, but rather, are all transferred to the same address. This occurs, for example, when the data is to be transferred to certain input/output devices. Each input/output device may be assigned a unique address or group of addresses. When a group of addresses are assigned to a particular input/output device it typically means that the particular device is capable of both receiving and transmitting information to and from the microprocessor. One such type of input/output device is a Universal Asynchronous Receiver Transmitter (UART).

A UART typically contains a plurality of registers that contain state and input/output data. Each register has a unique address that is mapped into the memory space of the microprocessor. The input and output registers, each having a unique address, have the capability of receiving or transmitting several data words in rapid succession through the use of an internal buffer for these registers. The internal buffer may be, for example, a First-In First-Out (FIFO) stack. As is well known, such a stack is capable of receiving and storing several data-words in quick succession.

In systems that do not employ block transfers the unique addresses for the input an output registers does not create any real difficulties. As described above, the microprocessor need only hold the address of the desired location in the UART (e.g., the input register) on the address bus while sequentially placing data on the data bus. This is accomplished by the microprocessor initiating a transfer between two locations (i.e, memory and the UART). If the destination location corresponds to the input register of the UART, the microprocessor activates a control line that instructs the UART to read data into its input register. The address of the specific register in the input/output device for storing the data is passed to the UART through the address bus.

However, in systems that employ a block transfer, the address of the destination is incremented. This in turn, causes the sequential data of the data block to end up at different locations.

The feature of connecting input/output devices to an address bus such that each of a plurality of addresses always correspond to a single address is known from US-A-5 687 357.

### Summary of the Invention

The present invention is defined by an apparatus according to independent claim 1 and by a corresponding method according to independent claim 12.

### Brief Description of the Drawings

The foregoing, and other objects and advantages will be understood more clearly from the following detailed description and from the accompanying figures. The following description and the figures related thereto are given by way of example only and in no way restrict the scope of the present invention. In the figures:
Figure 1 is block diagram of the typical prior art connections between a microprocessor and an external input/output device.
Figure 2 shows a prior art connection of an input/output device to an address bus.
Figure 3 is an exemplary embodiment of one aspect of the present invention.
Figure 4 shows an exemplary embodiment of how a plurality of input/output devices may be connected to an address bus according to the present invention.
Figure 5 shows one embodiment of how a plurality of input/output devices may be connected to a data bus according to the present invention.
Figure 6 shows an alternative embodiment of how a plurality of input/output devices may be connected to a data bus according to the present invention.
Figure 7 is an flow chart showing one exemplary method by which blocks of data may be transferred according to an embodiment of the present invention.

### Detailed Description of the Invention

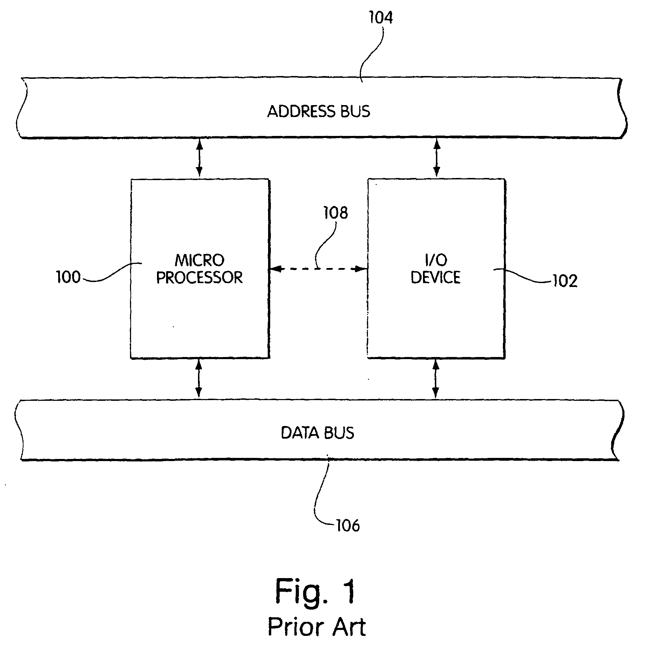

Figure 1 shows a conventional prior art configuration whereby a microprocessor 100 is connected to an external input/output (I/O) device 102. As shown. the microprocessor 100 and the I/O device 102 are both connected to a common address bus 104 and a common data bus 106. The microprocessor 100 and the device 102 also optionally have a control line 108 (shown dashed) connected between them.

The microprocessor 100 may be the only microprocessor of a computer or may be a microprocessor that is a part of a DMA controller that is specifically and only used for conducting DMA transfers between the system memory (not shown). The memory may be within or external to the microprocessor 100. However, for explanation, it need only be understood that the microprocessor 100 can access and place data on the data bus 106.

As described above, the microprocessor 100 places an address on the address bus 104 corresponding to where the data currently on the data bus 106 is to be transferred. In this manner, the microprocessor 100 may control all of the data movement to and from the I/O device 102.

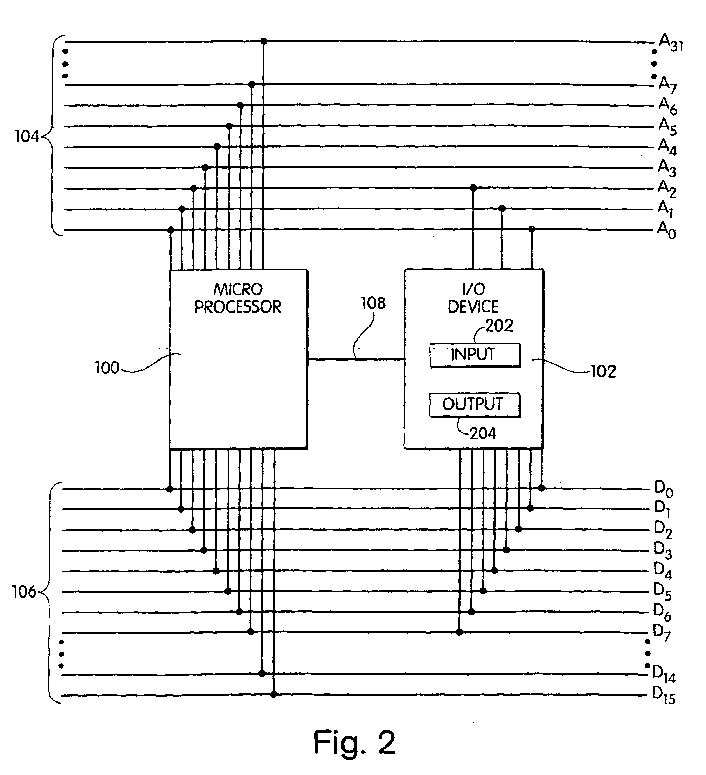

Referring now to Figure 2, a more detailed depiction of the prior art connection configuration between a microprocessor 100 and an I/O device 102 is shown. Figure 2 will be used in order to more clearly explain the shortcomings and problems of such a configuration as related to the transfer of blocks of data.

As shown, Figure 2 is substantially the same as Figure 1. However, the address bus 104 and the data bus 106 have been shown in more detail. In particular, the address bus 104, consists of several individuals address lines A₀ ... A₃₁. The data bus 106, similarly, consists of a plurality of data lines D₀ ... D₁₅, each data line representing a data bit. It should be noted that the number of address and data lines is variable. In this embodiment, the address bus 104 has been shown as being 32-bits wide and the data bus 106 is 16-bit wide. In typical systems, the width of the address bus 104 and the data bus 106 correspond to the size of the address space and the size of a data-word, respectively, used by the microprocessor 100. Thus. the microprocessor 100 shown in Figure 2 has a 32-bit address space and a 16-bit data-word.

The connections from both the address bus 104 and the data bus 106 to the I/O device 102 have also been altered from those shown in Figure 1. As shown in Figure 2, there are a plurality of direct connections from the I/O device 102 to both the address bus 104 and the data bus 106. The number of connections depends on the size of the data-word the I/O device 102 may handle as well as the width of the physical address of the device. As shown, the device 102 may be addressed by three bits and has an 8-bit data-word. The data connections of the I/O device 102 are connected to the lower 8 bits (D₀ to D₇) of the data bus 106 and the address connections are connected to the lowest three bits (A₀ to A₂) of the address bus 104.

In this embodiment, the I/O device 102 has at least two registers, an input register 202 and an output register 204. Each register typically has its own discrete address. Assume in the following explanation that the input register 202 has an address of 0 and the output register 204 has an address of 1. Thus, the microprocessor 100 may have mapped therein, the hexadecimal number FF00H to correspond to the input register 202 and the address FF01H for the output register 204. As described above, in many I/O devices 102, the input register 202 and the output register 204 may have a stack or a buffer associated with them.

If the microprocessor 100 is instructed to transfer the data contained at an arbitrary memory address (e.g., 1110H) to the memory address FF00H (i.e., input register 202 of the I/O device 102) the following events will happen. First, the microprocessor 100 will use a memory map (not shown) to determine that the address FF00H corresponds to the input register 202 of the I/O device 102. Then the microprocessor 100 will place the contents of memory address 1110H on the data bus 106, address 0 (i.e., the memory mapped address of the input register 202) on the address bus 104, and will activate the control line 108 to alert the I/O device 102 that data is about to be transferred to it. Then the I/O device 102 copies the data on the data bus 106 to the register addressed by the address on the address bus 104, in this example, to input register 202. If the microprocessor is then instructed to transfer the contents of memory address 1101H to memory address FF00H the same process is repeated. In this manner, all of the data is transferred to the same address. This type of memory transfer may be thought of as a serial transfer of data words to the same location.

Generally block transfer mechanisms cannot be applied in this context. A DMA transfer only consults a memory map once per block transfer. Once the first destination address is determined from the memory map, it is stored in a destination pointer that is incremented each time a data-word of the block is transferred. This incremented pointer value is successively placed on the address line.

Taking the example above, suppose the microprocessor 100 is instructed to transfer a block of data-words starting at memory location 1110H to memory location FF00H. The first data word (i.e.. the data at location 1110H) is placed on the data bus 106. The location of the first memory location (i.e., 1110H) is stored in memory pointer. Then the microprocessor uses the memory map to look up the memory location FF00H and, as above, converts it to the address O which denotes the input register 202 of the I/O device 102. This address (O) is stored in a destination pointer. The address stored in the destination pointer (O) is placed on the address bus 104 and the data-word is stored as described above. However, during the transfer of the second data-word (i.e., the data at location 1111H) the microprocessor 100 will increment both the memory and the destination pointers. The destination pointer now contains the value 1 which will cause the data to be stored in the output register 204 instead of the desired input register 202. Thus, the configuration shown in Figure 2 is not conducive for block transfers of data.

One prior art attempt to overcome this problem is disclosed in U.S. Patent No. 5,687,357 issued to Priem. Priem teaches the use of an address decoder to decode successive addresses to the same address when the system is performing a block transfer. However, the addition of the decoder requires the implementation of additional hardware or software to convert the addresses to the same address. The addition of extra components requires more physical space as well as constraining the speed of memory transfers to the time required for the decoding if such decoding is slower than the rate at which an I/O device may receive/transmit data. Certain embodiments of the present invention alleviate or overcome this problem.

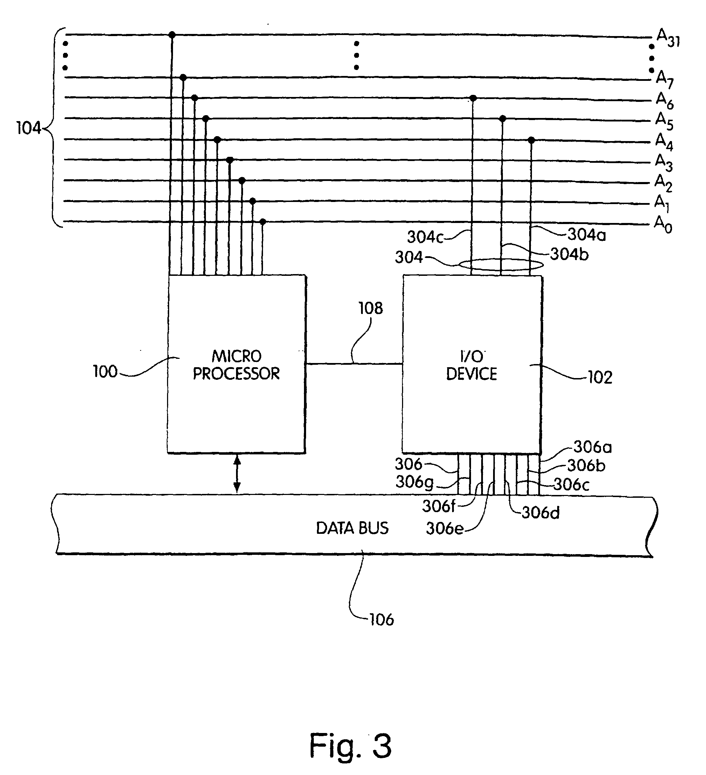

Figure 3 shows one embodiment of the present invention. In this embodiment, no additional decoding circuitry or software is required to effect a DMA block transfer of data to a single destination address.

The embodiment shown in Figure 3 includes a microprocessor 100, an I/O device 102, and address bus 104, and a data bus 106. The I/O device 102 is connected to the address bus 104 by device address lines 304a ... 304c and to the data bus 106 be device data lines 306a ... 306h. In this embodiment, the microprocessor 100 has a 32-bit address space and 16-bit data word. The size of the address space and the data word is not of much importance in the present invention and may vary. As above, the microprocessor 100 and the I/O device 102 are connected by a control line 108. As one of ordinary skill will readily recognize the control line 108 may be omitted in some circumstances, such as when the I/O device 102 has the capability of polling the address bus 104 to determine if data is being transferred to it.

As shown, the I/O device 102 is directly connected to the address bus 104. However, in contrast to Figure 2, the device address lines 304 are offset from the lowest order bit of the address bus 104. That is, the lowest order address line (as shown, device address line 304a) is not connected to the lowest order bit of the address bus 104 (e.g. A₀). In this embodiment. the device address lines 304 are offset by four bits with the lowest order device address line 304a being connected to the fifth lowest order bit A₄ of the address bus 104. This allows for sequential destination addresses to all be addressed to the same location without having to include any decoding circuitry of software.

Taking the example described above, the operation of block transfer according to the present invention will be described. In the example discussed above, because of the incremental increase in the address stored in the destination pointer, the information in the second memory location (e.g. 1111H) was directed to the wrong register of the I/O device 102. If the I/O device 102 is connected to the address bus 104 as shown in Figure 3, both addresses (0 and 1) will appear the same. That is, because the I/O device 102 is not connected to the four lowest order address lines, A₀-A₃, the numbers FF00H to FF0FH all appear as address FF00H.

Restated in terms of the destination pointer described above, the incremental addresses 0 to 7 will all appear as a 0 to the I/O device 102.

The offset described above is four bits. This will 16 memory locations to be collapsed into the same location. Thus, the problems described above are overcome by implementing connecting the address lines 304 to the address bus 104 where the lowest order address line 304a is offset from the lowest order address bus line A₀.

As just described, the offset was four bits and thereby allowed for 8 data words to be block transferred to the same address. Other offsets may be employed. One factor that affects the amount of the offset is the size of the buffer associated with the register at the desired address. Preferably, the amount of offset will equal size of the associated buffer. For example, if the size of the buffer is 4 words, the offset may be 2 bits. This would allow, for instance, addresses 1-3 (0001b-0010b), which represents 4 discrete addresses, to all be addressed to the same location (i.e., the third bit value which in this case is 0). Although the amount of offset need not be equal to the size of the buffer of the size of a block that may be transferred, this may be the most efficient set up for most applications.

The I/O device 102 described above may be any suitable known or later developed device that is capable of performing serial transfers of data to a single address. For example, the I/O device 102 could be a UART, a modem, a disk drive, a logic controller, or a network interface. As mentioned above, a buffer, a stack or similar data structures associated with the register being addressed in the I/O device 102 may (but need not) be used.

The present invention may be adapted to situations were data is to be transferred from a single location to two other locations at substantially the same instant. Each location may be a control subsystem. In many instances, the timing of the outputs from the control subsystems becomes critical and there may arise stringent requirements that each control subsystem produces an output within substantially the same instant. One approach is to provide a common clock to both subsystems to synchronize their operation. However, providing a single clock introduces a point of single device failure which could disrupt or possibly destroy the operation of the system. Thus, introduction of a common clock to a fault tolerant system is not an acceptable solution.

For example, fault tolerant systems typically use independent and parallel control subsystems to ensure that a failure in one control subsystem does not disable the entire system. The outputs of each control subsystem are compared to detect the presence of a fault in one of the subsystems. As is well known in the art, a decision or voting procedure is then invoked to choose which subsystems output will be used in controlling some portion of the system. For example, the two subsystems may both be capable of driving a single actuator (e.g., a motor).

Certain embodiments of the present invention can alleviate some or all of these problems by allowing for a single memory transfer from the microprocessor to simultaneously arrive at two or more control subsystems. The term control subsystem as used herein may be equated to any general I/O device previously described. Thus. for simplicity and continuity of discussion, the I/O device 102 discussed below includes, but is not limited to, a control subsystem. Preferably the I/O device 102 is a UART.

Further, according to another embodiment, the present invention allows for the simultaneous transfer of blocks of data to a plurality of I/O devices, where all blocks of data are transferred to the same address.

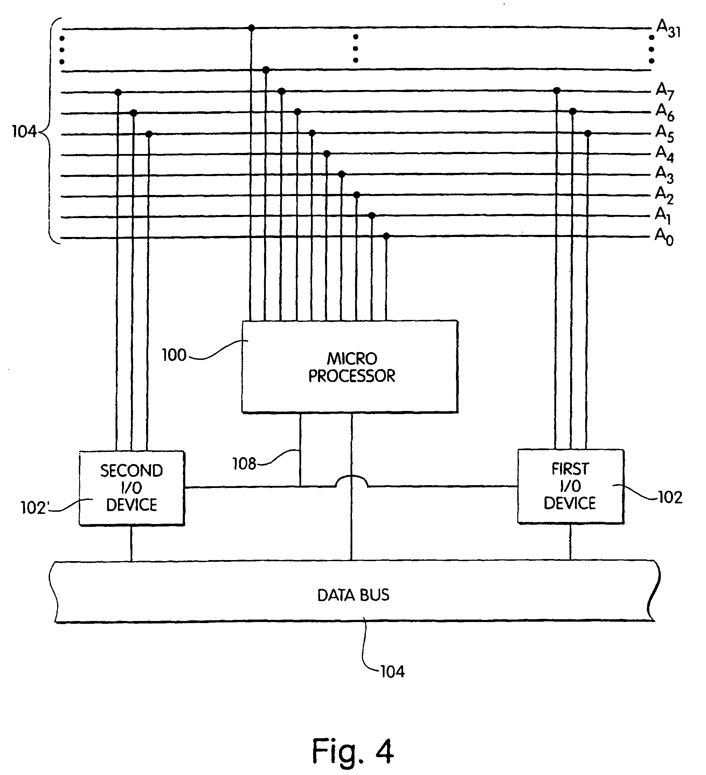

Referring now to Figure 4, an exemplary embodiment of a system that is capable of simultaneously transferring data to two I/O devices, 102 and 102', is disclosed. The number of I/O devices need not be equal to two and may be larger in some applications depending upon the amount of redundancy desired.

In this example, the system includes a first I/O device 102, a second I/O device 102'. and a microprocessor 100. The microprocessor 100 is directly connected to both the first and second I/O devices, 102 and 102', respectively, by a control line 108. The microprocessor 100 is connected to all the lines of the address bus 104 and may place an address on the address bus 104. As shown, both of the I/O devices, 102 and 102', are connected to the same address lines (A₄ to A₆). Assuming both I/O devices, 102 and 102', have the same address. because they are connected to the same lines of the address bus 104, both devices may be simultaneously addressed.

Suppose the microprocessor wishes information to be transferred to the input register 202 of the first I/O device. This transfer may be completed as detailed above. However, in a fault tolerant system it is typically desired that this information be backed up. That is, the data needs to be transferred to two independent locations (devices). Typically, to do this the microprocessor 100 would first transfer the data to the first device and then retransfer the same data to a different device. This requires more microprocessor 100 cycles and thereby increases overhead and slows the microprocessor 100. Further, this type of sequential transfer does not provide the data to both devices simultaneously.

However, according to one aspect of the present invention, because both the first I/O device 102 and the second I/O device 102' are connected to the same address lines (A₄-A₆₎) they may be simultaneously addressed. For example, after the microprocessor has signaled the I/O devices 102 and 102' via control line 104 that it wishes to transfer data to them, the microprocessor 100 will place an address 0 on the address bus 104 to direct the data on the data bus 106 to the input registers of both devices. That is, of course, assuming that both I/O devices 102 and 102' have the address 0 assigned to their respective input registers. In this manner, the data on the data bus 106 is simultaneously transferred to both I/O devices 102 and 102'.

As shown in Figure 4, both the first I/O device 102 and the second I/O device 102' have their respective connections to the address bus 106 offset by 4 bits. This, as detailed above, allows for the efficient block transfers of data to each device. Particularly, because both devices are controlled by the same control line 108 and are both directly connected to the same address lines (A₄ to A₆), block transfers of data may be simultaneously made to both the first I/O device 102 and the second I/O device 102'.

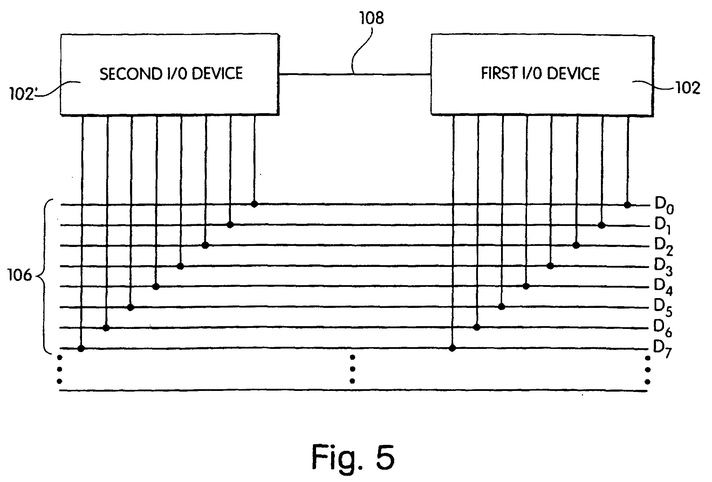

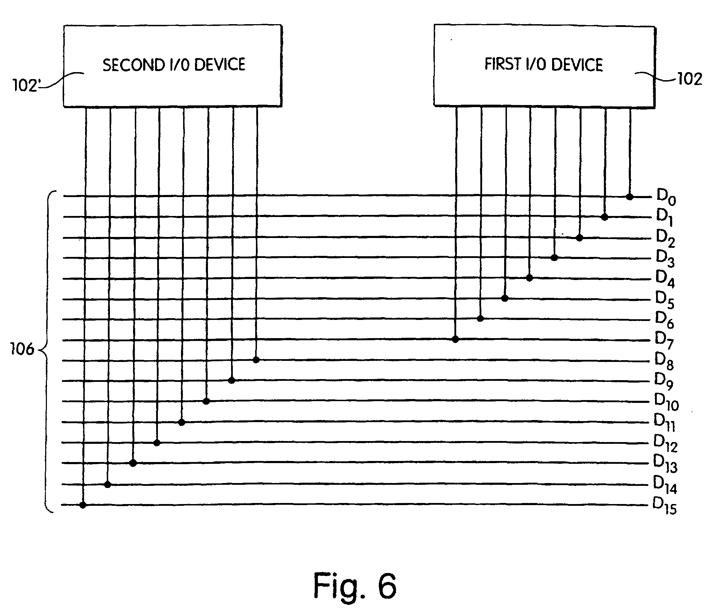

In Figure 4. both I/O devices 102 and 102', as well as the microprocessor 100, are connected to the data bus 106. Two different exemplary connections of the I/O devices 102 and 102' to the data bus 106 and the certain advantages and uses of each will be described in relation to Figures 5 and 6.

Figure 5 shows both the first and second I/O devices, 102 and 102', respectively, connected to the same portions of the data bus 106. More particularly, both devices are connected to the lower order data lines (D₀ to D₇) of the data bus 106. When configured in this manner, both I/O devices 102 and 102' will receive the same data. As shown, only a portion of the data lines of the data bus 106 are connected to the I/O devices 102 and 102'. However, as one of ordinary skill will readily realize, the I/O devices 102 and 102' could be connected to all of the data lines or any portion of them depending on the application.

An example of a situation where such a connection as shown in Figure 5 may arise is in a system that requires two copies of all stored data. By having both I/O devices 102 and 102' connected to the same data lines, and because they are both controlled by a common control line 108, the data presented on the data bus 106 is simultaneously stored in two locations (I/O devices 102 and 102'). This simultaneous storage allows for the creation of two copies of data that are both equally accessible. This advantageously allows for the creation of a backup copy of the data without having to take the time to copy the original into a backup file.

Another application of the simultaneous transfer of the same data is the aforementioned fault tolerant systems. By transferring data to two locations, the failure of one control subsystem will not seriously affect the operation of the apparatus being controlled by the subsystems.

Figure 6 shows an alternative connection scheme between the data bus 106 and the first and second I/O devices, 102 and 102', respectively. As shown, the first I/O device 102 is connected to the lower order data lines, (D₀ to D₇), and the second I/O device 102' is connected to the higher order data lines (D₈ to D₁₅). This allows for two different data words to be simultaneously transferred to two different locations using a single transfer command. Thus, different data is simultaneously available for each of the I/O devices connected to the data bus that are all addressable by a single address.

The configuration shown in Figure 6 allows, for example, the simultaneous control of two opposing actuators (i.e., motors). If each of the I/O devices 102 and 102' are connected to a different actuators (not shown) both actuators may be controlled by the microprocessor 100 transferring a single piece or block of data.

For instance, in a system that uses motors in order to maintain a wheel in an erect position, a motor may be employed on each side of the wheel to keep the wheel upright. As the wheel begins to lean to one side, the motor on the other side is actuated to bring the wheel back to vertical. If only one motor (through an I/O device) at a time may receive information about how it should operate, the wheel may be over-controlled. That is, one motor runs until the other begins to run. In this fashion the wheel will "wobble" due to the back and forth motion imparted by the sequential running of each motor individually. However, if both motors were able to receive information at the same time this could be alleviated. For example, as the wheel is brought towards vertical by one motor, the opposing motor could, at the same time, be slowly brought into action so that the wheel never passes vertical.

Alternatively, both the first and second I/O devices, 102 and 102' respectively, could receive the same information and still be connected to the data bus in the manner shown in Figure 6. In this case, the microprocessor 100 (not shown) would merely place the identical data on the lower order data lines Do to D₇ as it places on the high order data lines D₈ to D₁₅.

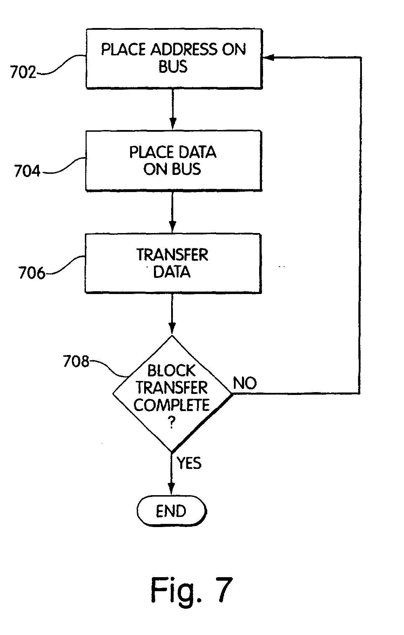

Figure 7 is a flow chart detailing one embodiment of a method of transferring data using an exemplary embodiment of the present invention. At step 702, an address is placed on an address bus. The address placed on the bus is held on the bus for a time period that is long enough for data to be read off the bus. In step 704, a portion of the data in the data block to be transferred (i.e., a data word) is placed on the data bus. Step 704 may occur during the same time period in which the address is held on the bus.

In one embodiment, two or more data blocks may be transferred in parallel. In this embodiment, the first portion of each of the data blocks may be simultaneously placed on portions of the data bus, e.g., the upper and lower halves of the bus. As described above, a DMA controller may be used to place the addresses and data on the bus.

Once the data is placed on the data bus, at step 706, the data is transferred to a device (i.e., a data storage device) which has a storage element for receiving the data. The data may be received by one device or a plurality of devices, as described above. In either case. the method continues until the entire block has been transferred as determined at block 708. Upon each subsequent pass through the flow chart of Figure 7, the address that is placed and held on the address bus is incremented. Using the embodiment described above, however, each transfer of a data word in a block is sequentially stored to the same storage element. notwithstanding the incrementation of the address.

Having thus described various illustrative embodiments of the present invention. some of its advantages and optional features, it will be apparent that such embodiments are presented by way of example only and are not by way of limitation. Those skilled in the art could readily devise alterations and improvements on these embodiments, as well as additional embodiments, without departing from the spirit and scope of the invention. For example, though the connections between the I/O devices and various busses have been shown as direct connections with no intervening circuitry or devices beyond those required to effectuate such connection, these connections could have additional circuitry or devices displaced between any of the busses and any of the I/O devices. Additionally, the width of the address and data busses is completely variable as is the address space of the microprocessor. Further, the size of the data word that each I/O device may handle is also variable. In addition, the control lines may be configured such that, even if two devices have the same address, information will only be transferred to one of them. Accordingly, the invention is limited only as defined in the following claims and equivalents thereto.

## Claims

1. Apparatus for performing transfers of data, the apparatus including an address bus having a plurality of address lines and a data bus having a plurality of data lines, the apparatus comprising:
a first input/output device connected to the address bus and the data bus, the first input/output device connected to the address bus such that each of a plurality of addresses always correspond to a single address in the first input/output device; and
a second input/output device connected to the address bus and the data bus, the second input/output device connected to the address bus such that each of a plurality of addresses always correspond to a single address in the second input/output device;
the apparatus is **characterized in that** the plurality of addresses which corresponds to a single address in the first input/output device is the same plurality of addresses which corresponds to a single address in the second input/output device.

2. The apparatus of claim 1, wherein the first and second input/output devices are universal asynchronous receiver transmitters.

3. The apparatus of claim 1, wherein the first and second input/output devices are not connected to an address decoder.

4. The apparatus of claim 1, wherein the connection of the first and second input/output devices to the address bus is offset.

5. The apparatus of claim 4, wherein the amount of offset is equal to the size of a data structure located in the input/output devices for handling data transfers.

6. The apparatus of claim 1, further comprising a DMA controller connected to the address bus and the data bus.

7. The apparatus of claim 1, wherein the connection to the address bus of the first input/output device is offset by a fixed amount, and wherein
the second input/output device is connected to the address bus such that it has the same offset as the first input/output device.

8. The apparatus of claim 7, wherein the first and second input/output devices are universal asynchronous receiver transmitters.

9. The apparatus of claim 8, wherein the first and second input/output devices are connected to the same data bus lines.

10. The apparatus of claim 8, wherein the first input/output device is connected to lower order data bus lines of the data and the second input/output device is connected to higher order data bus lines of the data bus.

11. The apparatus of claim 10, wherein in the lower order data bus lines and the higher order data bus lines are not the same data bus lines.

12. A method of electronically transferring, over a bus having an address portion and a data portion, a first block of data elements to a storage element of a first device and a second block of data elements to a storage element of a second device, the method comprising the steps of:
(a) placing and holding a first address on the address portion of the bus;
(b) during the step (a), transferring a first data element of the first block to the storage element of the first device; and
(c) simultaneously with the step (b), transferring a first data element of the second block to the storage element of the second device.

13. The method of claim 12, further comprising the steps of:
(d) placing and holding a second address on the address portion of the bus;
(e) during the step (d), transferring a second data element of the first block to the storage element of the first device; and
(f) simultaneously with the step (e), transferring a second data element of the second block to the storage element of the second device.

14. The method of claim 12, wherein the first data element of the first block is a data-word and wherein the first data element of the second block is a data-word.

15. The method of claim 12, wherein the storage element of the first device is a register and the first device is a Universal Asynchronous Receiver/Transmitter.

16. The method of claim 12, wherein the storage element of the second device is a register and the second device is a Universal Asynchronous Receiver/Transmitter.

17. The method of claim 12, wherein the first data element of the first block is identical to the first element of the second data block.

18. The method of claim 12, wherein the first data element of the first block is different from the first element of the second data block.

19. The method of claim 12, wherein steps (a), (b) and (c) are performed by a DMA controller.

20. The method of claim 13, wherein steps (d), (e) and (f) are performed by a DMA controller.

21. The apparatus of claim 1, wherein:
the first input/output device has a plurality of data inputs to receive data from the data bus;
a storage element to store the data received from the data bus;
a plurality of address inputs to receive an address from the address bus; and
means for determining whether the address received by any of the address inputs corresponds to an address assigned to the first device; and
wherein the second input/output device has a plurality of data inputs to receive data from the data bus;
a storage element to store the data received from the data bus;
a plurality of address inputs to receive an address from the address bus; and
means for determining whether the address received by any of the address inputs corresponds to an address assigned to the second input/output device.

22. The apparatus of claim 21, wherein the data received by both the first input/output device and the second input/output device is used to drive a plurality of actuators.

23. The apparatus of claim 21, wherein the data received by the first input/output device is the same as the data received by the second input/output device.

24. The apparatus of claim 21, wherein the data received by the first input/output device is different from the data received by the second input/output device.

## Patentansprüche

1. Vorrichtung für die Ausführung von Datenübertragungen, die einen Adressenbus mit mehreren Adressenleitungen und einen Datenbus mit mehreren Datenleitungen besitzt und umfaßt:
eine erste Eingabe/Ausgabe-Vorrichtung, die mit dem Adressenbus und mit dem Datenbus verbunden ist und mit dem Adressenbus in der Weise verbunden ist, daß jede von mehreren Adressen stets einer einzigen Adresse in der ersten Eingabe/Ausgabe-Vorrichtung entspricht; und
eine zweite Eingabe/Ausgabe-Vorrichtung, die mit dem Adressenbus und mit dem Datenbus verbunden ist und mit dem Adressenbus in der Weise verbunden ist, daß jede von mehreren Adressen stets einer einzigen Adresse in der zweiten Eingabe/Ausgabe-Vorrichtung entspricht;
wobei die Vorrichtung **dadurch gekennzeichnet ist, daß**
die mehreren Adressen, die einer einzigen Adresse in der ersten Eingabe/Ausgabe-Vorrichtung entsprechen, gleich den mehreren Adressen sind, die einer einzigen Adresse in der zweiten Eingabe/Ausgabe-Vorrichtung entsprechen.

2. Vorrichtung nach Anspruch 1, bei der die erste und die zweite Eingabe/Ausgabe-Vorrichtung universelle asynchrone Empfänger/Sender sind.

3. Vorrichtung nach Anspruch 1, bei der die erste und die zweite EingabelAusgabe-Vorrichtung nicht mit einem Adressendecodierer verbunden sind.

4. Vorrichtung nach Anspruch 1, bei der die Verbindung der ersten und zweiten Eingabe/Ausgabe-Vorrichtung mit dem Adressenbus versetzt ist.

5. Vorrichtung nach Anspruch 4, bei der der Versatzbetrag gleich der Größe der Datenstruktur ist, die sich in den Eingabe/Ausgabe-Vorrichtungen befindet, um Datenübertragungen abzuwickeln.

6. Vorrichtung nach Anspruch 1, die femer einen DMA-Controller umfaßt, der mit dem Adressenbus und mit dem Datenbus verbunden ist.

7. Vorrichtung nach Anspruch 1, bei der
die Verbindung mit dem Adressenbus der ersten Eingabe/Ausgabe-Vorrichtung um einen festen Betrag versetzt ist und
die zweite Eingabe/Ausgabe-Vorrichtung mit dem Adressenbus in der Weise verbunden ist, daß der Versatz gleich dem der ersten Eingabe/Ausgabe-Vorrichtung ist.

8. Vorrichtung nach Anspruch 7, bei der die erste und die zweite Eingabe/Ausgabe-Vorrichtung universelle asynchrone Empfänger/Sender sind.

9. Vorrichtung nach Anspruch 8, bei der die erste und die zweite Eingabe/Ausgabe-Vorrichtung mit denselben Datenbusleitungen verbunden sind.

10. Vorrichtung nach Anspruch 8, bei der die erste Eingabe/Ausgabe-Vorrichtung mit Datenbusleitungen niedrigerer Ordnung des Datenbusses und die zweite Eingabe/Ausgabe-Vorrichtung mit Datenbusleitungen höherer Ordnung des Datenbusses verbunden ist.

11. Vorrichtung nach Anspruch 10, bei der die Datenbusleitungen niedrigerer Ordnung und die Datenbusleitung höherer Ordnung nicht dieselben Datenbusleitungen sind.

12. Verfahren zum elektronischen Übertragen eines ersten Blocks aus Datenelementen an ein Speicherelement einer ersten Vorrichtung und eines zweiten Blocks aus Datenelementen an ein Speicherelement einer zweiten Vorrichtung über einen Bus, der einen Adressenabschnitt und einen Datenabschnitt besitzt, wobei das Verfahren die folgenden Schritte umfaßt:
(a) Ablegen und Halten einer ersten Adresse auf dem Adressenabschnitt des Busses;
(b) während des Schrittes (a) Übertragen eines ersten Datenelements des ersten Blocks an das Speicherelement der ersten Vorrichtung; und
(c) gleichzeitig zum Schritt (b) Übertragen eines ersten Datenelements des zweiten Blocks an das Speicherelement der zweiten Vorrichtung.

13. Verfahren nach Anspruch 12, das ferner die folgenden Schritte umfaßt:
(d) Ablegen und Halten einer zweiten Adresse auf dem Adressenabschnitt des Busses;
(e) während des Schrittes (d) Übertragen eines zweiten Datenelements des ersten Blocks an das Speicherelement der ersten Vorrichtung; und
(f) gleichzeitig zum Schritt (e) Übertragen eines zweiten Datenelements des zweiten Blocks an das Speicherelement der zweiten Vorrichtung.

14. Verfahren nach Anspruch 12, bei dem das erste Datenelement des ersten Blocks ein Datenwort ist und bei dem das erste Datenelement des zweiten Blocks ein Datenwort ist.

15. Verfahren nach Anspruch 12, bei dem das Speicherelement der ersten Vorrichtung ein Register ist und die erste Vorrichtung ein universeller asynchroner Empfänger/Sender ist.

16. Verfahren nach Anspruch 12, bei dem das Speicherelement der zweiten Vorrichtung ein Register ist und die zweite Vorrichtung ein universeller asynchroner Empfänger/Sender ist.

17. Verfahren nach Anspruch 12, bei dem das erste Datenelement des ersten Blocks gleich dem ersten Element des zweiten Datenblocks ist.

18. Verfahren nach Anspruch 12, bei dem das erste Datenelement des ersten Blocks von dem ersten Element des zweiten Datenblocks verschieden ist.

19. Verfahren nach Anspruch 12, bei dem die Schritte (a), (b) und (c) durch einen DMA-Controller ausgeführt werden.

20. Verfahren nach Anspruch 13, bei dem die Schritte (d), (e) und (f) durch einen DMA-Controller ausgeführt werden.

21. Vorrichtung nach Anspruch 1, bei der
die erste Eingabe/Ausgabe-Vorrichtung umfaßt:
mehrere Dateneingänge, um Daten von dem Datenbus zu empfangen;
ein Speicherelement, um die von dem Datenbus empfangenen Daten zu speichern;
mehrere Adresseneingänge, um eine Adresse von dem Adressenbus zu empfangen; und
eine Einrichtung zum Bestimmen, ob die von einem der Adresseneingänge empfangene Adresse einer Adresse entspricht, die der ersten Vorrichtung zugewiesen ist; und bei der
die zweite Eingabe/Ausgabe-Vorrichtung umfaßt:
mehrere Dateneingänge, um Daten von dem Datenbus zu empfangen;
ein Speicherelement, um die von dem Datenbus empfangenen Daten zu speichern;
mehrere Adresseneingänge, um eine Adresse von dem Adressenbus zu empfangen; und
eine Einrichtung zum Bestimmen, ob die von einem der Adresseneingänge empfangene Adresse einer Adresse entspricht, die der zweiten Eingabe/Ausgabe-Vorrichtung zugewiesen ist.

22. Vorrichtung nach Anspruch 21, bei der die von der ersten Eingabe/Ausgabe-Vorrichtung und von der zweiten Eingabe/Ausgabe-Vorrichtung empfangenen Daten dazu verwendet werden, mehrere Aktuatoren anzusteuern.

23. Vorrichtung nach Anspruch 21, bei der die von der ersten Eingabe/Ausgabe-Vorrichtung empfangenen Daten gleich den Daten sind, die von der zweiten Eingabe/Ausgabe-Vorrichtung empfangen werden.

24. Vorrichtung nach Anspruch 21, bei der die von der ersten Eingabe/Ausgabe-Vorrichtung empfangenen Daten von den Daten, die von der zweiten Eingabe/Ausgabe-Vorrichtung empfangen werden, verschieden sind.

## Revendications

1. Appareil pour effectuer des transferts de données, l'appareil comportant un bus d'adresses ayant une pluralité de lignes d'adresses et un bus de données ayant une pluralité de lignes de données, l'appareil comprenant :
un premier dispositif d'entrée/sortie connecté au bus d'adresses et au bus de données, le premier dispositif d'entrée/sortie étant connecté au bus d'adresses de façon que chacune de la pluralité d'adresses corresponde toujours à une adresse unique dans le premier dispositif d'entrée/sortie ; et
un second dispositif d'entrée/sortie connecté au bus d'adresses et au bus de données, le second dispositif d'entrée/sortie étant connecté au bus d'adresses de façon que chacune de la pluralité d'adresses corresponde toujours à une adresse unique dans le second dispositif d'entrée/sortie ;
l'appareil étant **caractérisé en ce que** la pluralité d'adresses qui correspond à une adresse unique dans le premier dispositif d'entrée/sortie est la même pluralité d'adresses que celle qui correspond à une adresse unique dans le second dispositif d'entrée/sortie.

2. Appareil selon la revendication 1, dans lequel les premier et second dispositifs d'entrée/sortie sont des émetteurs-récepteurs universels asynchrones.

3. Appareil selon la revendication 1, dans lequel les premier et second dispositifs d'entrée/sortie ne sont pas connectés à un décodeur d'adresses.

4. Appareil selon la revendication 1, dans lequel la connexion des premier et second dispositifs d'entrée/sortie au bus d'adresses est décalée.

5. Appareil selon la revendication 4, dans lequel la valeur du décalage est égal à la taille de la structure de données présente dans les dispositifs d'entrée/sortie pour gérer des transferts de données.

6. Appareil selon la revendication 1, comprenant en outre un contrôleur d'accès direct à la mémoire (DMA) connecté au bus d'adresses et au bus de données.

7. Appareil selon la revendication 1, dans lequel la connexion au bus d'adresses du premier dispositif d'entrée/sortie est décalée d'une valeur fixe, et dans lequel :
le second dispositif d'entrée/sortie est connecté au bus d'adresses de façon qu'il ait le même décalage que le premier dispositif d'entrée/sortie.

8. Appareil selon la revendication 7, dans lequel les premier et second dispositifs d'entrée/sortie sont des émetteurs-récepteurs universels asynchrones.

9. Appareil selon la revendication 8, dans l'equel les premier et second dispositifs d'entrée/sortie sont connectés aux mêmes lignes du bus de données.

10. Appareil selon la revendication 8, dans lequel le premier dispositif d'entrée/sortie est connecté à des lignes de poids faible du bus de données et le second dispositif d'entrée/sortie est connecté à des lignes de poids fort du bus de données.

11. Appareil selon la revendication 10, dans lequel les lignes de poids faible du bus de données et les lignes de poids fort du bus de données ne sont pas les mêmes lignes du bus de données.

12. Procédé de transfert électronique sur un bus ayant une partie d'adresses et une partie de données d'un premier bloc d'éléments de données vers un élément de stockage d'un premier dispositif et d'un second bloc d'éléments de données vers un élément de stockage d'un second dispositif, le procédé comprenant les étapes consistant à :
(a) placer et maintenir une première adresse sur la partie adresse du bus ;
(b) pendant l'étape (a), transférer un premier élément de données du premier bloc vers l'élément de stockage du premier dispositif ; et
(c) simultanément à l'étape (b), transférer un premier élément de données du second bloc vers l'élément de stockage du second dispositif.

13. Procédé selon la revendication 12, comprenant en outre les étapes consistant à :
(d) placer et maintenir une seconde adresse sur la partie adresse du bus ;
(e) pendant l'étape (d), transférer un second élément de données du premier bloc vers l'élément de stockage du premier dispositif ; et
(f) simultanément à l'étape (e), transférer un second élément de données du second bloc vers l'élément de stockage du second dispositif.

14. Procédé selon la revendication 12, dans lequel le premier élément de données du premier bloc est un mot de données et dans lequel le premier élément de données du second bloc est un mot de données.

15. Procédé selon la revendication 12, dans lequel l'élément de stockage du premier dispositif est un registre et le premier dispositif est un Emetteur-Récepteur Universel Asynchrone.

16. Procédé selon la revendication 12, dans lequel l'élément de stockage du second dispositif est un registre et le second dispositif est un Emetteur-Récepteur Universel Asynchrone.

17. Procédé selon la revendication 12, dans lequel le premier élément de données du premier bloc est identique au premier élément du second bloc de données.

18. Procédé selon la revendication 12, dans lequel le premier élément de données du premier bloc est différent du premier élément du second bloc de données.

19. Procédé selon la revendication 12, dans lequel les étapes (a), (b) et (c) sont effectuées par un contrôleur DMA.

20. Procédé selon la revendication 13, dans lequel les étapes (d), (e) et (f) sont effectuées par un contrôleur DMA.

21. Appareil selon la revendication 1, dans lequel :
le premier dispositif d'entrée/sortie a une pluralité d'entrées de données pour recevoir des données du bus de données ;
un élément de stockage pour stocker des données reçues du bus de données ;
une pluralité d'entrées d'adresses pour recevoir une adresse du bus d'adresses ; et
un moyen pour déterminer si l'adresse reçue par l'une quelconque des entrées d'adresses correspond à une adresse attribuée au premier dispositif ; et
dans lequel le second dispositif d'entrée/sortie a une pluralité d'entrées de données pour recevoir les données du bus de données ;
un élément de stockage pour stocker les données reçues du bus de données ;
une pluralité d'entrées d'adresses pour recevoir une adresse du bus d'adresses ; et
un moyen pour déterminer si l'adresse reçue par l'une quelconque des entrées d'adresses correspond à une adresse attribuée au second dispositif d'entrée/sortie.

22. Appareil selon la revendication 21, dans lequel les données reçues à la fois par le premier dispositif d'entrée/sortie et par le second dispositif d'entrée/sortie sont utilisées pour attaquer une pluralité d'actionneurs.

23. Appareil selon la revendication 21, dans lequel les données reçues par le premier dispositif d'entrée/sortie sont les mêmes que les données reçues par le second dispositif d'entrée/sortie.

24. Appareil selon la revendication 21, dans lequel les données reçues par le premier dispositif d'entrée/sortie sont différentes des données reçues par le second dispositif d'entrée/sortie.
